# DEMANDE DE BREVET EUROPEEN

(11) **EP 3 843 165 A1**
(43) Date de publication de la demande: **30.06.2021**
(21) Numéro de dépôt: 20215096.7
(22) Date de dépôt: 17.12.2020
(51) Int. Cl.: H01L 51/10, H04L 9/32

(54) **PROCÉDÉ DE FABRICATION D'UN CIRCUIT INTÉGRÉ SÉCURISÉ**

(30) Priorité: 23.12.2019 FR 1915466
(71) Demandeur: Commissariat à l'Energie Atomique et aux Energies Alternatives, 75015 Paris (FR)
(72) Inventeur: BENWADIH, Mohammed, 38054 GRENOBLE CEDEX 9 (FR); COPPARD, Romain, 38054 GRENOBLE CEDEX 9 (FR)
(74) Mandataire: Cabinet Beaumont

(57) **Abrégé**

La présente description concerne un circuit électronique (INV) comprenant au moins un empilement d'une piste (12) d'un matériau métallique ayant un travail de sortie, d'un bloc d'un matériau semiconducteur organique (14, 16) ayant une bande d'énergie HOMO et une bande d'énergie LUMO, et d'une couche monomoléculaire auto-assemblée (18), appelée SAM, interposée entre la piste et le bloc. La SAM comprend des premières molécules telles que l'écart entre le travail de sortie modifié de l'ensemble comprenant la piste et la SAM, dans le cas où la SAM comprend seulement les premières molécules, et le niveau bas de la bande d'énergie LUMO et l'écart entre le travail de sortie de l'ensemble comprenant la piste et la SAM, dans le cas d'une SAM comprenant seulement les premières molécules, et le niveau haut de la bande d'énergie HOMO soient chacun supérieurs à 0,2 eV.

## Description

### Domaine technique

La présente invention concerne le domaine de la sécurisation de circuits intégrés, notamment par des fonctions physiques non-clonables.

### Technique antérieure

Pour lutter contre la contrefaçon de circuits intégrés, on cherche à trouver des moyens pour distinguer un circuit légitime d'un circuit contrefait. Il est connu d'utiliser un mécanisme de défi-réponse dans lequel on utilise une fonction du circuit intégré pour calculer une réponse à partir d'un défi, la fonction étant unique pour chaque circuit intégré et ne pouvant pas être recréer (cloner) physiquement par un contrefacteur. Ce type de fonctions est appelé "fonction physique non clonable" ou PUF (sigle anglais pour Physical Unclonable Function). On connaît dans l'art antérieur des circuits intégrés comprenant différentes sortes de PUFs exploitant les dispersions fonctionnelles inhérentes aux circuits.

Un exemple de PUF exploite la variabilité induite sur les temps de propagation de signaux dans des circuits identiques. Un autre exemple de PUF exploite la variabilité des fréquences d'oscillation d'oscillateurs en anneaux de structures identiques. Un autre exemple de PUF exploite les dispersions technologiques des résistances dans un circuit.

Toutefois, les PUFs décrits précédemment sont basés sur des fonctionnements aux limites des contraintes électroniques des circuits et sont par conséquent très sensibles aux variations environnementales. En particulier, des changements de températures, de tensions d'alimentation ou des interférences électromagnétiques peuvent affecter leur performance en diminuant leur robustesse et en augmentant leur volatilité (i.e. leur variabilité intra-circuit). Ainsi, pour un défi constant, le PUF peut retourner des réponses différentes selon les conditions environnementales impliquant le fait qu'un circuit légitime peut éventuellement être déclaré comme étant contrefait.

Un autre problème concerne le vieillissement du circuit intégré. En effet, à cause d'un fonctionnement aux limites des contraintes électroniques, le moindre petit défaut qui peut survenir lors du vieillissement du circuit fait que le PUF ne répond plus de la même manière et, par conséquent, on ne peut plus identifier le circuit intégré.

Pour pallier ces défauts, il est souvent nécessaire d'adjoindre au PUF un circuit de post-traitement de la réponse reçue qui est coûteux en termes d'empreinte et de consommation.

### Résumé de l'invention

Un objet d'un mode de réalisation est de pallier tout ou partie des inconvénients des procédé de fabrication d'un circuit intégré sécurisé et des circuits intégrés intégrant des PUFs décrits précédemment.

Un autre objet d'un mode de réalisation est que le PUF soit pratiquement insensible aux variations de conditions environnementales sans l'adjonction d'un circuit de post-traitement coûteux.

Un autre objet d'un mode de réalisation est que le PUF soit pratiquement insensible au vieillissement sans l'adjonction d'un circuit de post-traitement coûteux.

Un autre objet d'un mode de réalisation est que la réalisation du PUF n'entraîne pas de modifications notables dans le procédé de fabrication du circuit.

Un mode de réalisation prévoit un circuit électronique comprenant au moins un empilement d'une piste d'un matériau métallique ayant un travail de sortie, d'un bloc d'un matériau semiconducteur organique ayant une bande d'énergie HOMO et une bande d'énergie LUMO, et d'une couche monomoléculaire auto-assemblée, appelée SAM, interposée entre la piste et le bloc, la SAM comprenant des premières molécules telles que l'écart entre le travail de sortie modifié de l'ensemble comprenant la piste et la SAM, dans le cas où la SAM comprend seulement les premières molécules, et le niveau bas de la bande d'énergie LUMO et l'écart entre le travail de sortie de l'ensemble comprenant la piste et la SAM, dans le cas d'une SAM comprenant seulement les premières molécules, et le niveau haut de la bande d'énergie HOMO soient chacun supérieurs à 0,2 eV.

Selon un mode de réalisation, l'écart entre le travail de sortie modifié de l'ensemble comprenant la piste et la SAM, dans le cas d'une SAM comprenant seulement les premières molécules, et le niveau bas de la bande d'énergie LUMO et l'écart entre le travail de sortie de l'ensemble comprenant la piste et la SAM, dans le cas où la SAM comprend seulement les premières molécules, et le niveau haut de la bande d'énergie HOMO sont chacun supérieurs à 0,3 eV, de préférence 0,4 eV.

Selon un mode de réalisation, le travail de sortie modifié de l'ensemble comprenant la piste et la SAM, dans le cas où la SAM comprend seulement les premières molécules, est augmenté par rapport au travail de sortie du matériau métallique, et la SAM comprend en outre des deuxièmes molécules, telles que le travail de sortie modifié de l'ensemble comprenant la piste et la SAM, dans le cas où la SAM comprend seulement les deuxièmes molécules, est diminué par rapport au travail de sortie du matériau métallique.

Selon un mode de réalisation, les premières molécules comprennent du 4-Méthyl(sulfanyl)thiophénol, du 4-méthoxythiophénol, du 4-méthylthiophénol, du 4-aminothiophénol, de la cystéamine, ou du 1-decanethiol.

Selon un mode de réalisation, les deuxièmes molécules comprennent du 2,3,4,5,6-pentafluorobenzenethiol, du 4-fluorothiophénol, du 4-nitrothiophénol, du 1H,1H,2H,2H-perfluorooctanethiol, ou du 1H,1H,2H,2H-perfluorodecanethiol.

Selon un mode de réalisation, le matériau métallique est de l'or, de l'argent, de l'aluminium, du palladium, du platine, du nickel, du chrome, du cuivre, du calcium, du titane et ou un alliage métallique comprenant au moins l'un de ces métaux.

Selon un mode de réalisation, le circuit électronique comprend au moins un transistor organique à effet à structure métal-oxyde-semiconducteur comprenant ledit empilement.

Selon un mode de réalisation, le circuit électronique comprend ledit empilement en deux exemplaires, le premier empilement avec un premier matériau semiconducteur organique et le deuxième empilement avec un deuxième matériau semiconducteur organique, la SAM du premier empilement étant réalisée simultanément avec la SAM du deuxième empilement.

Un mode de réalisation prévoit également un procédé de fabrication d'un circuit électronique comprenant la formation d'au moins un empilement d'une piste d'un matériau métallique ayant un travail de sortie, d'un bloc d'un matériau semiconducteur organique ayant une bande d'énergie HOMO et une bande d'énergie LUMO, et d'une couche monomoléculaire auto-assemblée, appelée SAM, interposée entre la piste et le bloc, la SAM comprenant des premières molécules telles que l'écart entre le travail de sortie modifié de l'ensemble comprenant la piste et la SAM, dans le cas où la SAM comprend seulement les premières molécules, et le niveau bas de la bande d'énergie LUMO et l'écart entre le travail de sortie de l'ensemble comprenant la piste et la SAM, dans le cas d'une SAM comprenant seulement les premières molécules, et le niveau haut de la bande d'énergie HOMO soient chacun supérieurs à 0,2 eV.

Selon un mode de réalisation, la SAM est formée par le dépôt d'une solution comprenant les premières molécules.

Selon un mode de réalisation, le travail de sortie modifié de l'ensemble comprenant la piste et la SAM, dans le cas où la SAM comprend seulement les premières molécules, est augmenté par rapport au travail de sortie du matériau métallique, et dans lequel la solution comprend en outre des deuxièmes molécules, telles que le travail de sortie modifié de l'ensemble comprenant la piste et la SAM, dans le cas où la SAM comprend seulement les deuxièmes molécules, est diminué par rapport au travail de sortie du matériau métallique.

Selon un mode de réalisation, la solution comprend le mélange d'un solvant polaire et d'un solvant apolaire.

Selon un mode de réalisation, le procédé comprend la formation dudit empilement en deux exemplaires, le premier empilement avec un premier matériau semiconducteur organique et le deuxième empilement avec un deuxième matériau semiconducteur organique, la SAM du premier empilement étant réalisée simultanément avec la SAM du deuxième empilement.

### Brève description des dessins

Ces caractéristiques et avantages, ainsi que d'autres, seront exposés en détail dans la description suivante de modes de réalisation particuliers faite à titre non limitatif en relation avec les figures jointes parmi lesquelles :
la figure 1 représente un schéma électrique d'un inverseur ;
la figure 2 représente une courbe d'évolution de la tension de sortie de l'inverseur de la figure 1 en fonction de la tension d'entrée de l'inverseur ;
la figure 3 est une vue en coupe, partielle et schématique, d'un mode de réalisation d'un inverseur ;
la figure 4 représente un diagramme de bandes simplifié à l'interface entre un métal et un matériau semiconducteur organique ;
la figure 5 représente, de façon schématique, l'agencement de molécules d'une SAM ;
la figure 6 représente des exemples de molécules utilisées pour former une SAM ;
la figure 7 représente un graphique représentant l'angle de contact et le travail de sortie pour différentes SAMs ;
la figure 8 représente, de façon schématique, l'agencement de molécules d'un mode de réalisation d'une SAM ;
la figure 9 représente l'évolution de la valeur moyenne mesurée de la mobilité d'un transistor MOS en fonction du pourcentage, dans la solution utilisée pour former la SAM du transistor, de molécules pour SAM de type N ;
la figure 10 représente l'évolution de la dispersion des valeurs mesurées de la mobilité d'un transistor MOS en fonction du pourcentage, dans la solution utilisée pour former la SAM du transistor, de molécules pour SAM de type N ;
la figure 11 représente des courbes de variation du courant de drain de transistors en fonction de la tension drain-source ;
la figure 12 représente des courbes de variation du courant de drain d'autres transistors MOS en fonction de la tension drain-source ;
la figure 13A est une vue en coupe, partielle et schématique, de la structure obtenue à une étape d'un procédé de fabrication du circuit électronique représenté en figure 3 ;
la figure 13B illustre une autre étape du procédé ;
la figure 13C illustre une autre étape du procédé ;
la figure 13D illustre une autre étape du procédé ;
la figure 13E illustre une autre étape du procédé ;
la figure 13F illustre une autre étape du procédé ;
la figure 13G illustre une autre étape du procédé ;
la figure 13H illustre une autre étape du procédé ;
la figure 13I illustre une autre étape du procédé ;
la figure 13J illustre une autre étape du procédé ;
la figure 13K illustre une autre étape du procédé ; et
la figure 13L illustre une autre étape du procédé.

### Description des modes de réalisation

De mêmes éléments ont été désignés par de mêmes références dans les différentes figures. En particulier, les éléments structurels et/ou fonctionnels communs aux différents modes de réalisation peuvent présenter les mêmes références et peuvent disposer de propriétés structurelles, dimensionnelles et matérielles identiques. Par souci de clarté, seuls les étapes et éléments utiles à la compréhension des modes de réalisation décrits ont été représentés et sont détaillés.

Dans la description qui suit, lorsque l'on fait référence à des qualificatifs de position absolue, tels que les termes "avant", "arrière", "haut", "bas", "gauche", "droite", etc., ou relative, tels que les termes "dessus", "dessous", "supérieur", "inférieur", etc., ou à des qualificatifs d'orientation, tels que les termes "horizontal", "vertical", etc., il est fait référence sauf précision contraire à l'orientation des figures.

Dans la suite de la description, on entend par l'expression "un élément principalement en un matériau" ou "un élément principalement à base d'un matériau" que ledit élément comprend plus de 50 % en masse, de préférence plus de 80 % en masse, plus préférentiellement plus de 90 % en masse, dudit matériau. Dans la suite de la description, on appelle "matériau isolant électriquement" ou "matériau diélectrique" un matériau dont la résistivité électrique est supérieure à 10⁵ Ω.m et on appelle "matériau conducteur électriquement" un matériau dont la résistivité électrique est inférieure à 0,1 Ω.m. En outre, on considère ici que les termes "isolant" et "conducteur" signifient respectivement "isolant électriquement" et "conducteur électriquement". Sauf précision contraire, les expressions "environ", "approximativement", "sensiblement", et "de l'ordre de" signifient à 10 % près, de préférence à 5 % près.

Selon un mode de réalisation, la fonction physique non clonable correspond à un circuit logique réalisé à partir de transistors organiques à effet de champ (OFET, sigle anglais pour Organic Fiel Effect Transistor). Un OFET est un transistor à effet de champ dont le canal est formé par un semiconducteur organique. Selon un mode de réalisation, la fonction physique non clonable correspond à un circuit logique réalisé à partir de transistors organiques à effet de champ à structure métal-oxyde-semiconducteur, également appelé transistor MOS (sigle anglais pour Metal Oxide Semiconductor). Selon un mode de réalisation, le circuit logique peut comprendre au moins un inverseur logique.

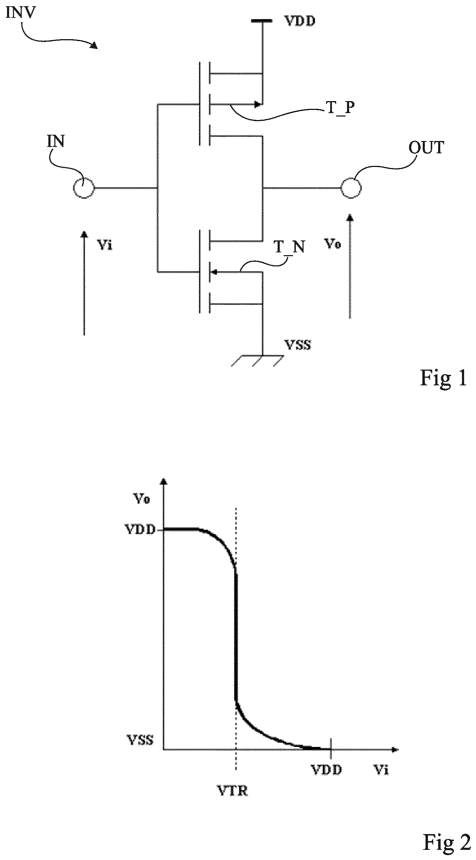

La figure 1 est un schéma électrique d'un inverseur logique INV. L'inverseur INV comprend un transistor MOS T_N à canal N et un transistor MOS T_P à canal P. L'entrée IN de l'inverseur INV est reliée aux grilles des transistors T_N et T_P. La source du transistor T_P est reliée à une source d'un potentiel de référence haut VDD. La source du transistor T_N est reliée à une source d'un potentiel de référence bas VSS, par exemple la masse. Les drains des transistors T_N et T_P sont reliés à la sortie OUT de l'inverseur INV. L'entrée IN de l'inverseur INV reçoit la tension Vi et la sortie OUT de l'inverseur INV fournit la tension Vo.

La figure 2 est une courbe d'évolution de la tension Vo en fonction de la tension Vi. Lorsque la tension Vi augmente de VSS à VDD, la tension Vo passe successivement d'un palier à VDD à un palier à VSS. La transition du palier à VDD au palier à VSS se produit lorsque la tension Vi dépasse un seuil VTR.

Les inverseurs, comme l'inverseur INV de la figure 1, permettent notamment la réalisation de portes logiques réalisant par exemple des opérations logiques du type NAND ou NOR. Selon un mode de réalisation, la fonction physique non clonable du circuit intégré correspond à un circuit logique réalisé notamment à partir d'inverseurs tels que décrits précédemment dans lesquels les transistors MOS sont des transistors organiques. Le mécanisme de défi-réponse peut alors consister à fournir un signal numérique au circuit logique qui fournit une réponse permettant l'identification du circuit électronique.

Selon un mode de réalisation, au moins certains des transistors MOS organiques du circuit logique sont réalisés avec des propriétés présentant une dispersion suffisante pour que la reproduction du circuit logique ne permette pas d'en reproduire le fonctionnement.

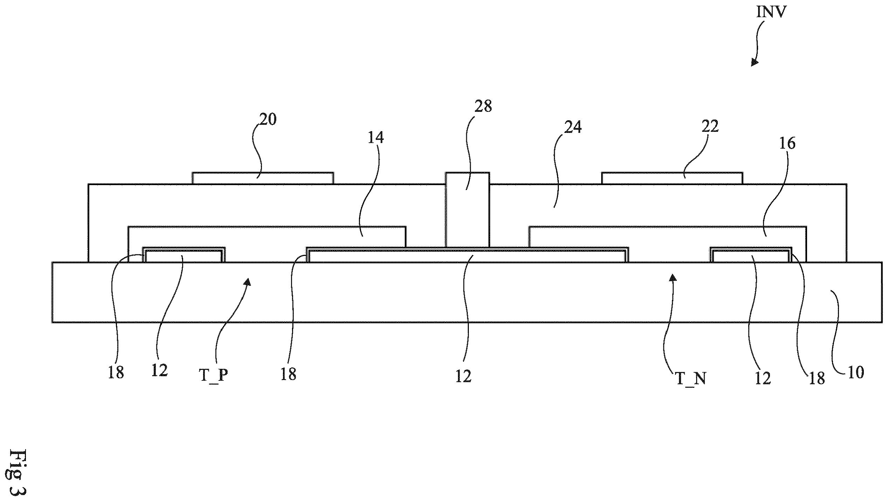

La figure 3 est une vue en coupe, partielle et schématique, d'un mode de réalisation de l'inverseur logique INV de la figure 1.

L'inverseur INV comprend le transistor MOS à canal P T_P et le transistor MOS à canal N T_N formés sur un support 10. L'inverseur INV comprend :
- des pistes conductrices 12 formant les contacts de source et de drain des transistors T_N et T_P ;
- un bloc semiconducteur organique 14 dans lequel sont formées les régions de drain, de source et de canal du transistor T_P et un bloc semiconducteur organique 16 dans lequel sont formées les régions de drain, de source et de canal du transistor T_N ;
- des couches d'interfaces 18 interposées entre les pistes conductrices 12 et les blocs semiconducteurs organiques 14 et 16, chaque couche d'interface 18 étant au contact de l'une des pistes conductrices 12 et de l'un des blocs semiconducteurs organiques 14 ou 16 ;
- une piste conductrice 20 formant la grille du transistor T_P en vis-à-vis du bloc semiconducteur organique 14 et une piste conductrice 22 formant la grille du transistor T_N en vis-à-vis du bloc semiconducteur organique 16 ; et
- une couche isolante 24 interposée entre les pistes conductrices 20 et 22 et les blocs semiconducteurs organiques 14 et 16 et formant les isolants de grille des transistors T_N et T_P.

La figure 3 représente une configuration de transistor dite à "grille haute" (en anglais top gate) dans laquelle la couche isolante 24 est située entre le support 10 et les grilles 20 et 22. L'inverseur logique INV peut alors comprendre en outre des éléments de connexion 28, un seul élément de connexion étant représenté en figure 3, traversant la couche isolante 24 et venant au contact des pistes conductrices 12. A titre de variante, chaque transistors T_N et T_P peut être dans une configuration de transistor dite à "grille basse" (en anglais bottom gate), dans laquelle les grilles 20 et 22 sont situées entre le support 10 et la couche isolante 24. La figure 3 représente en outre une configuration de transistor dite à "contact bas" dans laquelle les pistes conductrices 12 sont au contact du support 10. A titre de variante, chaque transistor T_N et T_P peut être dans une configuration de transistor dite à contact haut dans laquelle la couche isolante 24 est située entre le support 10 et les pistes conductrices 12.

Le support 10 peut être à base de silicium, de verre, d'un métal, d'un alliage métallique, d'une résine, d'un polymère, ou d'au moins deux de ces composés. Des exemples de polymère sont le polycarbonate (PC), le polyuréthane (PU), le polyéthylène téréphtalate (PET), le polyéthylène naphtalate (PEN), les polyimides (PI) notamment les polyétherimides (PEI), les polyéther sulfones (PES), les polysulfones (PSU), le poly(sulfure de phénylène) (PPS), le polyéther éther cétone (PEEK), les polyacrylates (PA), les polyamide-imides (PAI), le polystyrène (PS), le polyéthylène (PE), le polypropylène (PP), les polyamines (PA), ou les polymères cellulosiques. Le support 10 peut avoir une structure monocouche ou multicouche. Le support 10 peut avoir une épaisseur comprise entre 25 µm et 1 mm, par exemple de l'ordre de 175 µm.

Chaque piste conductrice 12, 20 et 22 et chaque élément de connexion 28 est en or, en argent, en aluminium, en palladium, en platine, en nickel, en chrome, en cuivre, en calcium, en titane et ou en un alliage métallique comprenant au moins l'un de ces métaux. Selon un autre mode de réalisation, chaque piste conductrice 20, 22 et chaque élément de connexion 28 est en un polymère conducteur, par exemple le poly(3,4-éthylènedioxythiophène) : poly(styrène sulfonate) (PEDOT:PSS), la polyaniline (Pani), le polyphénylène vinylène (PPV) ou le polyparaphénylène (PPP). Selon un autre mode de réalisation, chaque piste conductrice 12, 20 et 22 et chaque élément de connexion 28 est en un composite de particules conductrices (particules d'argent, nanofils d'argent, nanotubes de carbone) et d'un matériau matrice comme un polymère. Chaque piste conductrice 12, 20 et 22 peut avoir une épaisseur comprise entre 100 nm et 10 µm, par exemple de l'ordre de 500 nm.

Le bloc semiconducteur organique 14 adapté pour la fabrication d'un transistor MOS à canal P peut être en pentacène, ou en polythyiophène. Le bloc semiconducteur organique 16 adapté pour la fabrication d'un transistor MOS à canal N peut être en fullerène C₆₀, en fullerène C₇₀, ou en pérylène diimide. L'épaisseur de chaque bloc semiconducteur organique 14 ou 16 peut être comprise entre 20 nm et 200 nm, notamment égale à environ 90 nm.

La couche isolante 24 peut être en poly[perfluoro(butényl vinyl éther)], polystyrène, poly(2-methylstyrène), poly(1,4-butadiène), poly(butyl méthacrylate), poly(méthyl méthacrylate), ou polytétrafluoroéthylène. L'épaisseur de la couche isolante 24 peut être comprise entre 50 nm et 1 µm, notamment égale à environ 600 nm.

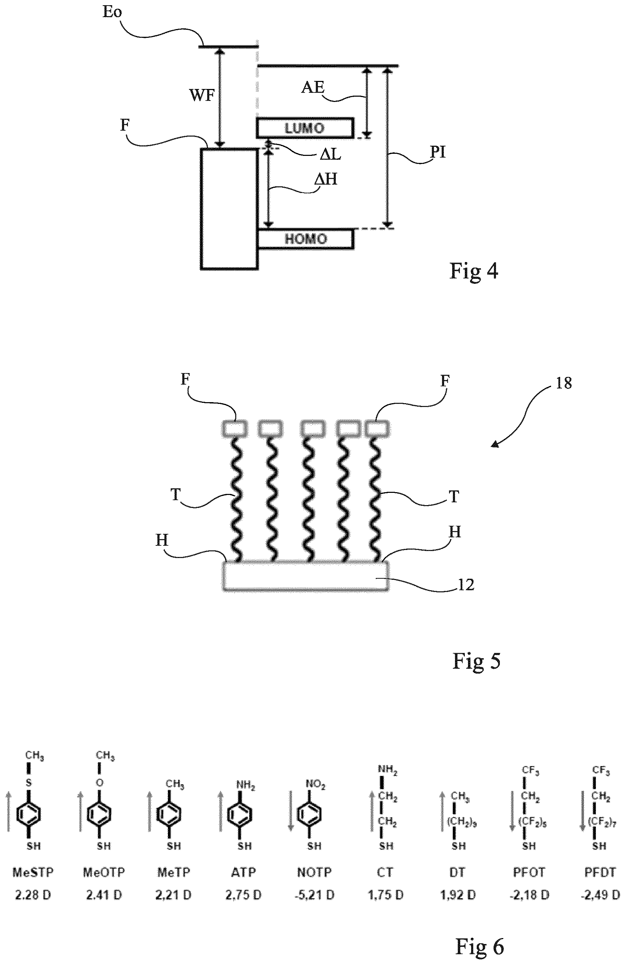

La figure 4 représente un diagramme de bandes simplifié à l'interface entre l'une des pistes conductrices 12 et le bloc semiconducteur organique 14 ou 16 le recouvrant, en l'absence de la couche d'interface 18.

Le métal composant la piste conductrice 12 est caractérisé par son travail de sortie WF, qui est l'énergie minimum, mesurée en électron-volts, nécessaire pour arracher un électron depuis le niveau de Fermi F du métal jusqu'à un point situé à l'infini en dehors du métal (niveau du vide E₀). A titre d'exemple, le travail de sortie WF de l'or pur est égal à 5,1 eV. En pratique, notamment en fonction du degré de contamination de l'or, le travail de sortie WF de l'or varie généralement entre 4,6 eV et 5 eV. Un matériau semiconducteur organique est notamment caractérisé par deux bandes d'énergie HOMO et LUMO. On appelle ΔL l'écart entre le niveau de Fermi F du métal et le niveau bas de la bande d'énergie LUMO et on appelle ΔH l'écart entre le niveau de Fermi F du métal et le niveau haut de la bande d'énergie HOMO. En outre, on appelle affinité électrique AE l'écart entre le niveau du vide E₀ pour le matériau semiconducteur et le niveau bas de la bande d'énergie LUMO et on appelle potentiel d'ionisation PI l'écart entre le niveau du vide E₀ pour le matériau semiconducteur et le niveau haut de la bande d'énergie HOMO.

De façon générale, il est préférable que l'écart ΔL soit le plus faible possible pour faciliter le transfert d'électrons entre la piste conductrice 12 et le bloc semiconducteur organique 14 ou 16 et il est préférable que l'écart ΔH soit le plus faible possible pour faciliter le transfert de trous entre la piste conductrice 12 et le bloc semiconducteur organique 14 ou 16. La couche d'interface 18 interposée entre la piste conductrice 12 et le bloc organique semiconducteur 14 ou 16 permet de modifier le travail de sortie WF' de l'ensemble comprenant la piste conductrice 12 et la couche d'interface 18 associée par rapport au travail de sortie WF du métal. Il est connu de prévoir la couche d'interface 18 pour réduire l'écart ΔL ou ΔH selon l'application visée.

Chaque couche d'interface 18 est une couche monomoléculaire auto-assemblée, également appelée SAM (sigle anglais pour Self-Assembled Monolayer).

La figure 5 représente de façon schématique la structure des molécules d'un mode de réalisation de la SAM 18. Les molécules utilisées pour former la SAM comprennent chacune un groupe de tête H qui a une forte affinité avec le métal de la piste conductrice 12 et un groupe de queue T adapté à réagir avec les molécules voisines de la SAM. Lors de la formation de la SAM, le groupe de tête H forme une liaison covalente avec le métal en surface de la piste conductrice 12, ce qui assure une adhérence élevée de la SAM 18 sur la piste conductrice 12. Les groupes de queue T des molécules de la SAM interagissent entre eux et définissent le niveau d'ordre dans la SAM. Chaque molécule de la SAM peut en outre comprendre un groupement terminal F qui peut définir les propriétés électroniques et chimiques de la SAM avec un autre matériau déposé par la suite sur la piste conductrice 12.

Selon un mode de réalisation, chaque SAM 18 est formée par le dépôt sur la piste conductrice 12 associée d'une solution contenant au moins un solvant et les molécules de la SAM. Dans la suite de la description, les SAMs sont dites d'un même lot lorsque ces SAMs sont formées simultanément à partir d'une solution unique et les SAMs sont dites de lots différents lorsque ces SAMs ne sont pas formées simultanément et/ou sont formées à partir de solutions distinctes non issues d'une solution unique.

De façon générale, la formation de la SAM 18 comprend deux phases. Dans une première phase courte, de l'ordre de la minute, les molécules de la SAM sont chimisorbées à la surface du métal et les liaisons entre les atomes du groupe de tête et le métal se forment. La première phase est limitée principalement par la diffusion des molécules de la SAM vers la surface métallique. La concentration des molécules de la SAM est donc un paramètre important. Lors d'une deuxième phase, les molécules chimisorbées interagissent entre elles et s'organisent. La deuxième phase est plus longue et peut prendre plusieurs jours selon l'ordre désirée.

Selon un mode de réalisation, les couches d'interface 18 recouvrant les pistes conductrices 12 de l'inverseur INV représenté en figure 3 ont des compositions différentes. Selon un autre mode de réalisation, toutes les couches d'interface 18 recouvrant les pistes conductrices 12 sont réalisées simultanément de l'inverseur INV représenté en figure 3.

Selon un mode de réalisation, notamment lorsque les pistes conductrices 12 sont en or, en cuivre, en argent, en platine, en fer ou en nickel, les molécules composant les SAMs 18 font partie des organo-sulfures, notamment les dérivés d'alkanethiols, de thiols cycliques et aromatiques, de sulfures et de disulfures.

La figure 6 représente des exemples de molécules utilisées pour former chaque SAM 18. Pour ces molécules, le groupe de tête est le groupe sulfhydryle -SH. Les flèches verticales orientées vers le bas ou vers le haut représentent le moment dipolaire de la molécule. L'amplitude, mesurée en debye, du moment dipolaire de la molécule est indiqué sous le symbole de la molécule. Les significations chimiques des symboles présentés sur la figure 6 sont indiqués dans le tableau 1 ci-dessous.

**[Table 1]**

| | |
|---|---|
| MeSTP | 4-Méthyl(sulfanyl)thiophénol |
| MeOTP | 4-méthoxythiophénol |
| MeTP | 4-méthylthiophénol |
| ATP | 4-aminothiophénol |
| NOTP | 4-nitrothiophénol |

| CT | cystéamine |
|---|---|
| FTP | 4-fluorothiophénol |
| PFBT | 2,3,4,5,6-pentafluorobenzenethiol |
| DT | 1-decanethiol |
| PFOT | 1H,1H,2H,2H-perfluorooctanethiol |
| PFDT | 1H,1H,2H,2H-perfluorodecanethiol |

En considérant une structure comprenant la piste conductrice 12 et la SAM 18 qui la recouvre, pour laquelle la SAM recouvre de façon uniforme la piste conductrice 12 et pour laquelle les molécules de la SAM 18 sont considérées idéalement comme étant perpendiculaires à la surface de la piste conductrice 12, le travail de sortie modifié WF' d'une piste conductrice 12 en or recouverte d'une SAM, pour chacun des matériaux du tableau 1, est indiqué dans le tableau 2 suivant.

**[Table 2]**

| SAM | WF' (en eV) |
|---|---|
| MeSTP | 4,19 |
| MeOTP | 4,24 |
| MeTP | 4,28 |
| DT | 4,29 |
| ATP | 4,64 |
| CT | 4,68 |
| Référence Or | 4,75 |
| NOTP | 4,84 |
| FTP | 5,1 |
| PFBT | 5,15 |
| PFOT | 5,26 |
| PFDT | 5,44 |

Le sens de variation du travail de sortie modifié WF' par rapport au travail de sortie WF en l'absence de la SAM 18 dépend notamment du sens du moment dipolaire des molécules de la SAM 18. L'amplitude, en valeur absolue, de la variation du travail de sortie modifié WF' par rapport au travail de sortie WF dépend notamment de l'amplitude, en valeur absolue, du moment dipolaire des molécules de la SAM 18. Dans la suite de la description, on appelle molécule pour SAM de type N une molécule permettant la formation d'une SAM 18 qui fait diminuer le travail de sortie modifié WF' par rapport au travail de sortie WF et on appelle molécule pour SAM de type P une molécule permettant la formation d'une SAM 18 qui fait augmenter le travail de sortie modifié WF' par rapport au travail de sortie WF.

Toutefois, les molécules de la SAM 18 peuvent être inclinées par rapport à la surface de la piste conductrice 12, notamment en raison des interactions entre les groupes de queue des molécules composant la SAM 18, ce qui peut modifier les valeurs indiquées précédemment.

Selon un mode de réalisation, chaque bloc semiconducteur organique 14 ou 16 est formé par le dépôt sur la SAM 18 d'une solution contenant au moins un solvant et le matériau composant le bloc semiconducteur organique 14 ou 16 ou des précurseurs du matériau composant le bloc semiconducteur organique 14 ou 16.

De façon générale, les propriétés de transfert de charges à l'interface entre la piste conductrice 12 et le bloc semiconducteur organique 14 ou 16 dépendent de nombreux paramètres, dont les paramètres suivants :
- la morphologie du matériau semiconducteur organique 14 ou 16 au contact de la piste conductrice 12 recouverte de la SAM 18 qui peut changer selon la nature de la SAM 18 ;
- la nature chimique de la SAM ;
- le métal composant la piste conductrice 12 ;
- la pureté du métal en surface de la piste conductrice 12 et/ou la propreté de la surface de la piste conductrice 12 ;
- le procédé de fabrication de la SAM 18, notamment la concentration des molécules de la SAM 18 dans la solution utilisée pour former la SAM 18, le solvant de cette solution, le traitement thermique mis en oeuvre avec le dépôt de cette solution ; et
- le procédé de fabrication du bloc semiconducteur organique 14 ou 16 formé au contact de la SAM 18 notamment le solvant de la solution utilisée pour former le matériau semiconducteur organique et le traitement thermique suivant le dépôt de cette solution.

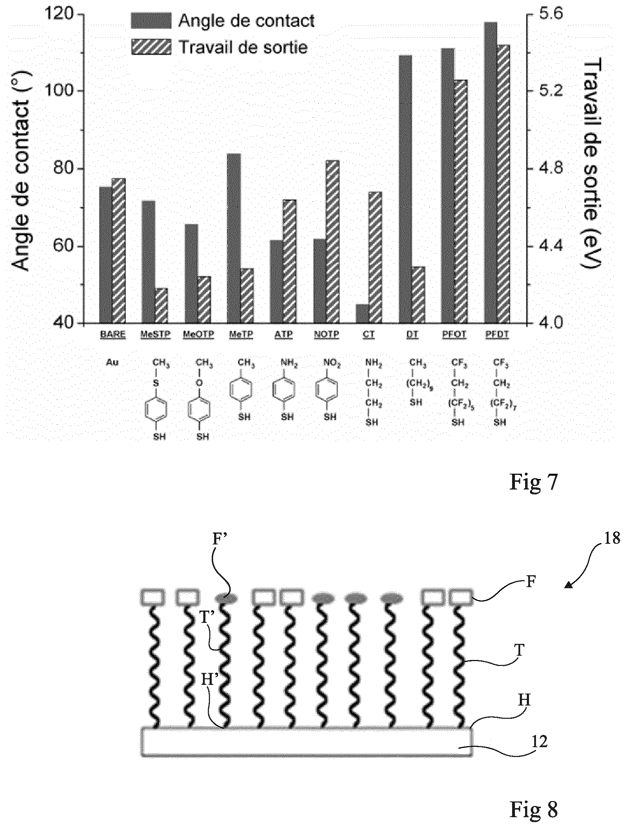

La figure 7 est un graphique représentant l'angle de contact et le travail de sortie modifié sur l'or de molécules utilisées pour former les SAMs 18. L'angle de contact est l'angle de contact statique d'une goutte d'eau déminéralisée déposée sur la SAM. Comme cela apparaît sur cette figure, le caractère hydrophobe ou hydrophile varie grandement d'une SAM à l'autre. A titre d'exemple, les molécules DT et MeOTP conduisent à des travaux de sortie modifiées équivalents mais présentent des angles de contact opposés. La mouillabilité de la SAM peut notamment influer sur la formation de la SAM 18 sur la piste conductrice 12 et la formation du bloc semiconducteur organique 14 ou 16 sur la SAM 18 et ainsi influer sur les propriétés de transfert de charges entre la piste conductrice 12 et le bloc semiconducteur organique 14 ou 16. De ce fait, deux molécules de SAM ayant les mêmes dipôles mais des mouillabilités différentes peuvent conduire à des différences dans les propriétés de transfert de charges entre la piste conductrice 12 et le bloc semiconducteur organique 14 ou 16 finalement obtenues.

Selon un mode de réalisation, la composition de la SAM 18 et le procédé de fabrication de la SAM 18 sont choisis de façon que des transistors comprenant cette SAM et de même structure ont des propriétés de fonctionnement qui ne sont pas reproductibles pour des transistors d'un même lot et/ou pour des transistors de lots différents. Selon un mode de réalisation, un circuit comprenant de tels transistors est utilisé comme PFU. En effet, deux circuits correspondant au même schéma électrique ne donneront pas la même réponse à un même défi, ce qui permet de distinguer un circuit légitime d'un circuit contrefait.

L'absence de reproductibilité résulte d'une dispersion importante des propriétés de fonctionnement des transistors pour des transistors d'un même lot et/ou pour des transistors de lots différents, alors que le procédé de fabrication des SAMs est identique. Selon un mode de réalisation, pour obtenir une dispersion importante, la composition de la SAM 12 est choisie de sorte à augmenter l'écart ΔL entre le travail de sortie modifié WF' de l'ensemble comprenant la piste conductrice 12 et la SAM 18 et la bande d'énergie LUMO ou l'écart ΔH entre le travail de sortie modifié WF' et la bande d'énergie HOMO du matériau semiconducteur organique. En effet, les inventeurs ont mis en évidence qu'une augmentation de cet écart entraîne une augmentation de la dispersion des propriétés de fonctionnement des transistors pour des transistors d'un même lot ou pour des transistors de lots différents alors le procédé de fabrication des SAMs est identique. Selon un mode de réalisation, pour obtenir une dispersion importante, des molécules différentes de SAM sont mélangées dans la solution utilisée pour la réalisation de la SAM, les molécules ayant des dipôles différents, de préférence des dipôles de sens opposé.

Selon un mode de réalisation, la molécule de la SAM 18 recouvrant le bloc semiconducteur organique à canal N est choisie pour que chaque écart ΔL et ΔH soit supérieur à 0,2 eV, de préférence supérieur à 0,3 eV. A titre d'exemple, lorsque la piste conductrice est en or et que le bloc semiconducteur organique 14 est adapté pour la formation d'un transistor à canal P, la molécule de la SAM 18 est choisie pour que le travail de sortie modifié WF' soit de préférence supérieur à 4,8 eV. A titre d'exemple, lorsque la piste conductrice est en or et que le bloc semiconducteur organique 16 est adapté pour la formation d'un transistor à canal N, la molécule de la SAM 18 est choisie pour que le travail de sortie modifié WF' soit de préférence inférieur à 4,8 eV.

Selon un mode de réalisation, la solution utilisée pour la formation de la SAM comprend un solvant unique. Selon un mode de réalisation, la solution utilisée pour la formation de la SAM comprend un mélange d'au moins deux solvants, par exemple un solvant polaire et un solvant apolaire. Des exemples de solvants polaires sont l'eau, l'acétone, le diméthylsulfoxyde, l'acétonitrile, la pyridine, et les alcools notamment l'éthanol. Des exemples de solvants apolaires sont le n-hexane, le pentane, l'éther de pétrole, le cyclohexane, le cyclopentane, le benzène, le toluène, les xylènes, le chloroforme, l'éther diéthylique, et le 1,4-dioxane.

Selon un mode de réalisation, la SAM 18 comprend au moins deux types de molécules différentes. Selon un mode de réalisation, la SAM 18 comprend au moins des premières molécules ayant un premier dipôle et des deuxièmes molécules ayant un deuxième dipôle différent du premier dipôle. Selon un mode de réalisation, les premier et deuxième dipôles ont des orientations opposées. Selon un mode de réalisation, les premières molécules sont des molécules pour SAM de type P et les deuxièmes molécules sont des molécules pour SAM de type N. Selon un mode de réalisation, les premières molécules sont le PFBT et les deuxièmes molécules sont le MeTP. Selon un mode de réalisation, la SAM 18 comprend au moins trois types de molécules différentes. Selon un mode de réalisation, la SAM 18 comprend au moins des premières molécules ayant un premier dipôle, des deuxièmes molécules ayant un deuxième dipôle différent du premier dipôle, et des troisièmes molécules ayant un troisième dipôle différent du premier dipôle et différent du deuxième dipôle. Selon un mode de réalisation, les premier et deuxième dipôles ont des orientations opposées. Selon un mode de réalisation, les premières molécules sont des molécules pour SAM de type P et les deuxièmes et troisièmes molécules sont des molécules pour SAM de type N. Selon un mode de réalisation, la SAM 18 comprend au moins des premières molécules ayant un premier dipôle, des deuxièmes molécules ayant un deuxième dipôle différent du premier dipôle, des troisièmes molécules ayant un troisième dipôle différent du premier dipôle et différent du deuxième dipôle, et des quatrièmes molécules ayant un quatrième dipôle différent du premier dipôle, différent du deuxième dipôle, et différent du troisième dipôle. Selon un mode de réalisation, les premier et troisièmes dipôles ont des orientations opposées. Selon un mode de réalisation, les premières et deuxièmes molécules sont des molécules pour SAM de type P et les troisièmes et quatrièmes molécules sont des molécules pour SAM de type N. Selon un mode de réalisation, la SAM comprend les molécules PFBT, PFOT et DT qui sont des molécules pour SAM de type P, et les molécules MeOTP, MeTP et ATP qui sont des molécules pour SAM de type N.

La figure 8 représente de façon très schématique la structure d'une SAM 18 obtenue lorsque deux molécules différentes sont utilisées. La SAM comprend des premières molécules ayant chacune un groupe de tête H, un groupe de queue T et, éventuellement un groupement terminal F, et des deuxièmes molécules ayant chacune un groupe de tête H', un groupe de queue T' et, éventuellement un groupement terminal F'. Avec une telle disposition, les propriétés de transfert de charges de l'interface obtenue dépendent notamment de la façon dont les premières et deuxièmes molécules se répartissent dans la SAM. Cette répartition ne peut pas être réalisée de façon reproductible, de sorte que les propriétés de transfert de charges ainsi obtenues ne sont pas reproductibles pour des interfaces d'un même lot et/ou pour des interfaces de lots différents.

Selon un mode de réalisation, la SAM 18 est formée par le dépôt d'une solution comprenant une concentration de molécules pour SAM de type P comprise entre 0,01 g/L et 1 g/L et une concentration de molécules pour SAM de type N comprise entre 0,01 g/L et 1 g/L.

Des premiers, deuxièmes, et troisièmes essais ont été réalisés. Pour tous les essais décrits par la suite, des transistors MOS ont été fabriqués. La longueur de canal de chaque transistor était égale à environ 50 µm et la largeur de canal de chaque transistor était égale à environ 5000 µm. Pour chaque transistor, les pistes conductrices 12 étaient en or. Pour tous les transistors, la couche isolante 24 était en poly[perfluoro(butényl vinyl éther)]. Pour chaque transistor à canal P, le bloc semiconducteur organique était en pentacène, déposé en solution avec le mésitylène ou la tétraline comme solvant. Pour chaque transistor à canal N, le bloc semiconducteur organique était en pérylène-diimide, déposé en solution avec le dichlorobenzène comme solvant. Sauf indication contraire, les SAMs d'un même lot ont été réalisées simultanément à partir d'une solution unique.

Pour les premiers essais, les SAMs 18 ont été réalisées par le dépôt d'une solution comprenant des molécules de SAM de type N et des molécules de SAM de type P. Pour les premiers essais, les molécules de SAM de type N étaient du MeTP, et les molécules de SAM de type P étaient du PFBT. Les SAMs ont été réalisées en plusieurs lots, un lot avec une concentration de molécules pour SAM de type P avec un taux de dilution de 10⁻³ et un autre lot avec un lot avec une concentration de molécules pour SAM de type P avec un taux de dilution de 10⁻⁵. Ensuite, les molécules pour SAM de type N ont été ajoutées.

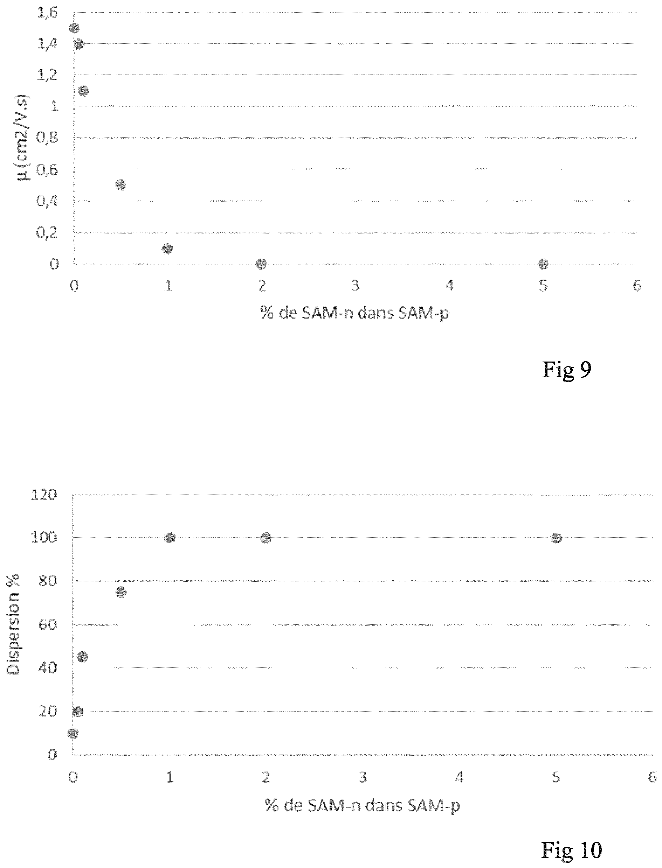

Les figures 9 et 10 représentent, pour les premiers essais, respectivement l'évolution de la valeur moyenne de la mobilité µ de transistors MOS ayant la même structure et l'évolution de la dispersion des valeurs mesurées de la mobilité µ, en fonction du pourcentage de molécules pour SAM de type N dans la solution utilisée pour la formation des SAMs.

Comme cela apparaît sur les figures 9 et 10, on remarque qu'à partir de 0,2 % en volume de molécules pour SAM de type N mélangées à la solution contenant les molécules pour SAM de type P, la mobilité µ diminue de 35 %. Au-delà de 0,2 % de molécules pour SAM de type N, la dispersion des valeurs numériques mesurées pour la mobilité µ devient importante, notamment supérieure à 75 %.

Pour les deuxièmes essais, des premiers transistors à canal P ont été réalisés avec des SAMs 18 comprenant seulement du PFBT et des deuxièmes transistors à canal P ont été réalisés avec des SAMs 18 formées à partir d'une solution comprenant des molécules pour SAM de type P correspondant à du PFBT et 0,2 % de molécules pour SAM de type N correspondant à du MeTP. Les SAMs ont été réalisées en plusieurs lots.

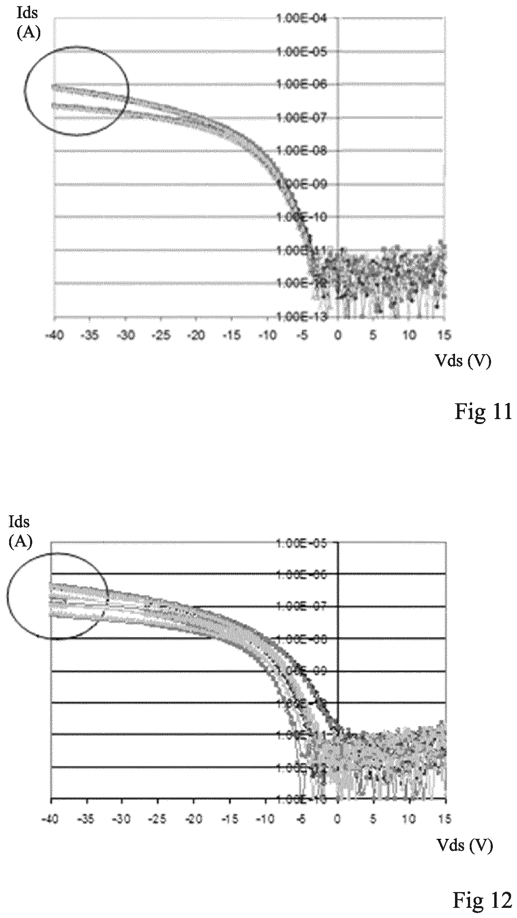

La figure 11 représente des courbes de variation du courant de drain Ids, exprimé en ampère (A), des premiers transistors en fonction de la tension drain-source Vds, exprimée en volt (V), et la figure 12 représente des courbes de variation du courant de drain Ids, exprimé en ampère (A), des deuxièmes transistors en fonction de la tension drain-source Vds, exprimée en volt (V). Pour les figures 11 et 12, des courbes ont été obtenues avec une tension grille-source égale à 40 V et des courbes ont été obtenues avec une tension grille-source égale à -40 V. Comme cela apparaît sur la figure 11, il est possible de séparer les deux groupes de courbes alors que la dispersion trop importante des valeurs mesurées ne permet de séparer les deux groupes de courbes en figure 12.

Des troisièmes essais ont été réalisés. Pour les troisièmes essais, la solution utilisée pour la formation des SAMs comprenait 0,2 % en volume de molécules pour SAM de type N mélangées à des molécules pour SAM de type P.

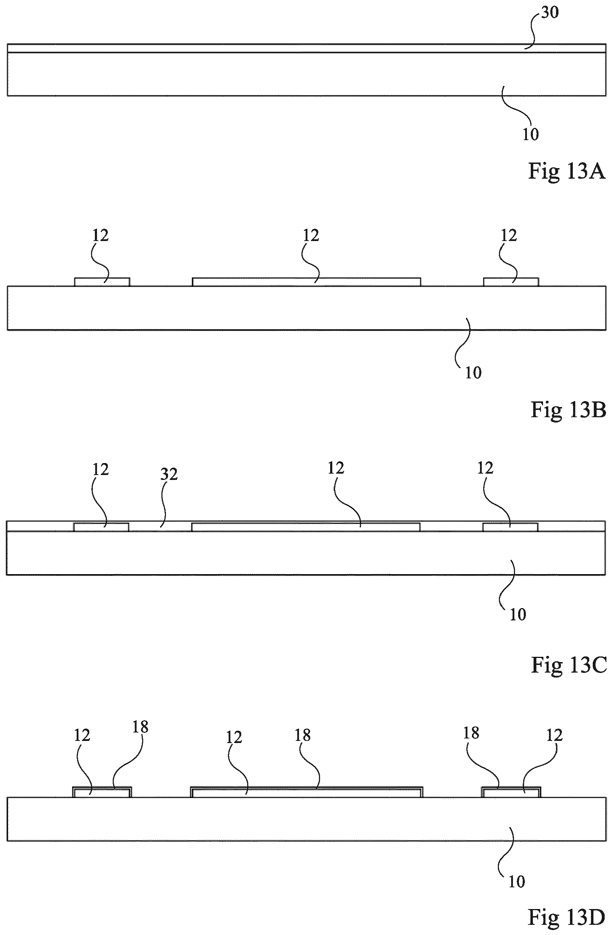

Les figures 13A à 13K sont des vues en coupe, partielles et schématiques, de structures obtenues à des étapes successives d'un mode de réalisation d'un procédé de fabrication de l'inverseur INV représenté en figure 3.

La figure 13A représente la structure obtenue après la formation, sur le support 10, d'une couche métallique 30 du matériau composant les pistes conductrices 12.

La figure 13B représente la structure obtenue après la délimitation des pistes conductrices 12 dans la couche 30. Ceci peut comprendre une étape de formation d'un masque de gravure sur la couche 30 comprenant des ouvertures aux emplacement où la couche 30 doit être retirée, la gravure de la couche au travers du masque, et le retrait du masque.

La figure 13C représente la structure obtenue après le dépôt, sur la totalité de la structure représentée en figure 13B, d'une couche 32 d'une solution comprenant au moins un solvant et des molécules pour SAM.

La figure 13D représente la structure obtenue après le retrait de la solution en excès. Les SAMs 18 recouvrant toutes les pistes conductrices 12 sont obtenues.

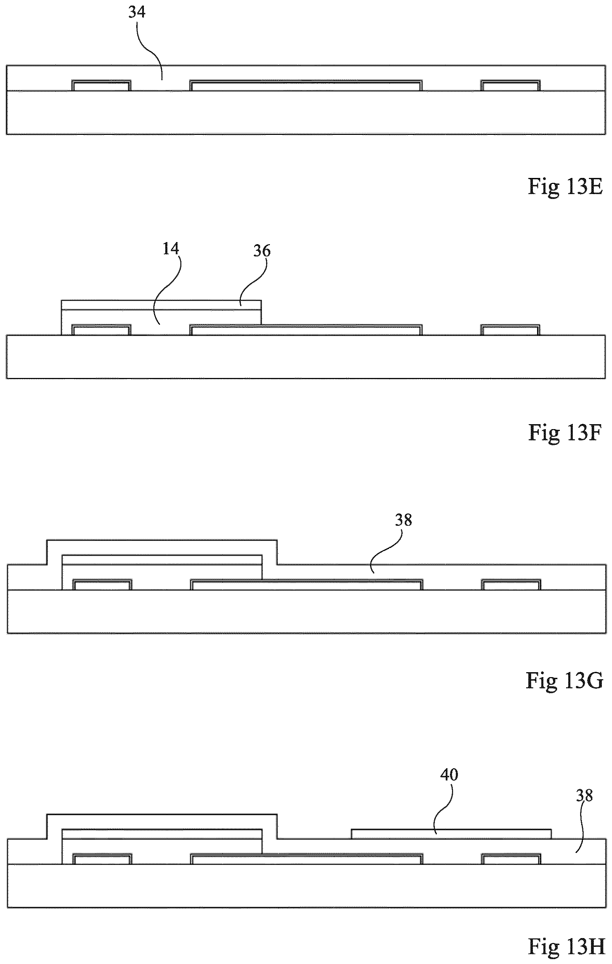

La figure 13E représente la structure obtenue après la formation d'une couche 34 du matériau composant le bloc semiconducteur organique 14 sur la totalité de la structure représentée en figure 13D.

La figure 13F représente la structure obtenue après la délimitation du bloc semiconducteur organique 14 dans la couche 34. Ceci peut être réalisé par des étapes comprenant la formation, sur la couche 34, d'un masque 36, par exemple en résine, à l'emplacement souhaité du bloc semiconducteur organique 14 et la gravure de la couche 34 au travers du masque 36.

La figure 13G représente la structure obtenue après la formation d'une couche 38 du matériau composant le bloc semiconducteur organique 16 sur la totalité de la structure représentée en figure 13F.

La figure 13H représente la structure obtenue après la formation, sur la couche 38, d'un masque 40, par exemple en résine, à l'emplacement souhaité du bloc semiconducteur organique 16.

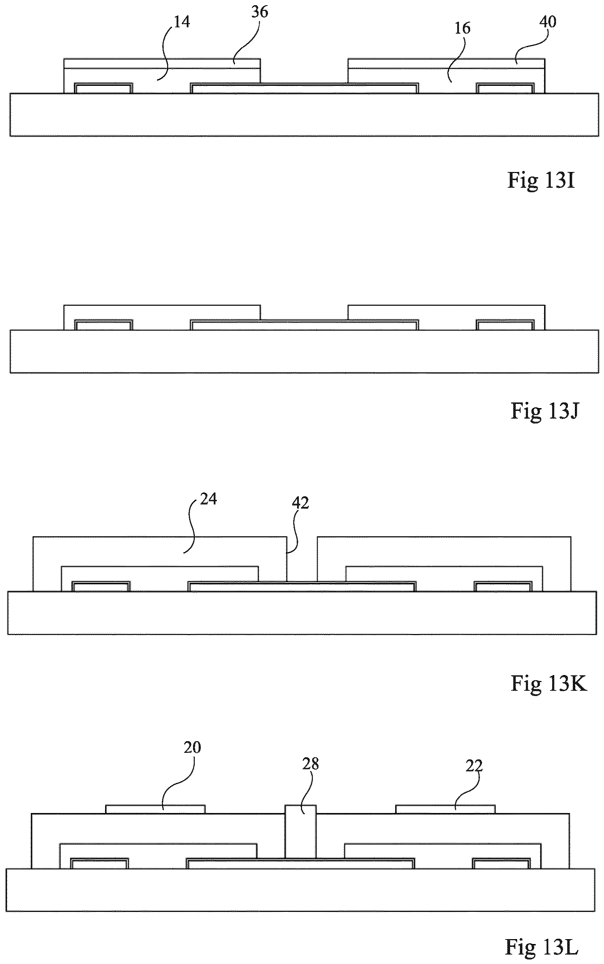

La figure 13I représente la structure obtenue après la délimitation du bloc semiconducteur organique 16 dans la couche 38 suivi du retrait du masque 40. Le masque 36 peut permettre de protéger le bloc semiconducteur organique 14 pendant la gravure de la couche 38.

La figure 13J représente la structure obtenue après le retrait des masques 36 et 40.

La figure 13K représente la structure obtenue après la formation de la couche isolante 24 et de la gravure d'au moins des ouvertures 42 dans la couche isolante 24, une seule ouverture 42 étant représentée en figure 13K, à l'emplacement souhaité de l'élément de connexion 28.

La figure 13L représente la structure obtenue après la formation des pistes conductrices 20 et 22 sur la couche isolante 24 et des éléments de connexion 28 dans l'ouvertures 42.

Dans le mode de réalisation de procédé décrit précédemment, le procédé de formation des SAMs 18 et des blocs semiconducteurs organiques 14 et 16 correspond à un procédé dit soustractif, dans lequel la solution utilisée pour la formation des SAMs ou des blocs semiconducteurs organiques 14 et 16 est déposée sur la totalité de la structure et dans lequel les portions non utilisées sont ensuite retirées, par exemple par rinçage, photolithographie ou ablation laser. Selon le matériau considéré, le dépôt sur la totalité de la structure peut être réalisé par exemple par dépôt à la tournette (en anglais spin-coating), revêtement par pulvérisation, héliographie, revêtement par filière (en anglais slot-die coating), revêtement à la lame (en anglais blade-coating), flexographie ou sérigraphie. Selon un mode de réalisation, le procédé de formation de formation des SAM 18 et des blocs semiconducteurs organiques 14 et 16 peut correspondre à un procédé dit additif, par exemple par impression directe de la solution utilisée pour la formation des SAMs ou des blocs semiconducteurs organiques 14 et 16 aux emplacements souhaités, par exemple par impression par jet d'encre, héliographie, sérigraphie, flexographie, revêtement par pulvérisation (en anglais spray coating) ou dépôt de gouttes (en anglais drop-casting).

Dans le mode de de réalisation de procédé décrit précédemment, toutes les SAMs 18 recouvrant les pistes conductrices 12 sont formées simultanément. A titre de variante, les SAMs 18 interposées entre les pistes conductrices 12 et le bloc semiconducteur organique 14 peuvent être formés séparément des SAMs 18 interposées entre les pistes conductrices 12 et le bloc semiconducteur organique 16. Des SAMs de compositions différentes peuvent alors être formées.

Divers modes de réalisation et variantes ont été décrits. La personne du métier comprendra que certaines caractéristiques de ces divers modes de réalisation et variantes pourraient être combinées, et d'autres variantes apparaîtront à la personne du métier. Enfin, la mise en oeuvre pratique des modes de réalisation et variantes décrits est à la portée de la personne du métier à partir des indications fonctionnelles données ci-dessus.

## Revendications

1. Circuit électronique (INV) comprenant au moins un empilement d'une piste (12) d'un matériau métallique ayant un travail de sortie (WF), d'un bloc d'un matériau semiconducteur organique (14, 16) ayant une bande d'énergie HOMO et une bande d'énergie LUMO, et d'une couche monomoléculaire auto-assemblée (18), appelée SAM, interposée entre la piste et le bloc, la SAM comprenant des premières molécules telles que l'écart entre le travail de sortie modifié de l'ensemble comprenant la piste et la SAM, dans le cas où la SAM comprend seulement les premières molécules, et le niveau bas de la bande d'énergie LUMO et l'écart entre le travail de sortie de l'ensemble comprenant la piste et la SAM, dans le cas d'une SAM comprenant seulement les premières molécules, et le niveau haut de la bande d'énergie HOMO soient chacun supérieurs à 0,2 eV, dans lequel le travail de sortie modifié de l'ensemble comprenant la piste et la SAM, dans le cas où la SAM comprend seulement les premières molécules, est augmenté par rapport au travail de sortie du matériau métallique, et dans lequel la SAM (18) comprend en outre des deuxièmes molécules, telles que le travail de sortie modifié de l'ensemble comprenant la piste et la SAM, dans le cas où la SAM comprend seulement les deuxièmes molécules, est diminué par rapport au travail de sortie du matériau métallique.

2. Circuit électronique selon la revendication 1, dans lequel l'écart entre le travail de sortie modifié de l'ensemble comprenant la piste et la SAM, dans le cas d'une SAM comprenant seulement les premières molécules, et le niveau bas de la bande d'énergie LUMO et l'écart entre le travail de sortie de l'ensemble comprenant la piste et la SAM, dans le cas où la SAM comprend seulement les premières molécules, et le niveau haut de la bande d'énergie HOMO sont chacun supérieurs à 0,3 eV, de préférence 0,4 eV.

3. Circuit électronique selon la revendication 1 ou 2, dans lequel les premières molécules comprennent du 4-Méthyl(sulfanyl)thiophénol, du 4-méthoxythiophénol, du 4-méthylthiophénol, du 4-aminothiophénol, de la cystéamine, ou du 1-decanethiol.

4. Circuit électronique selon la revendication 3, dans lequel les deuxièmes molécules comprennent du 2,3,4,5,6-pentafluorobenzenethiol, du 4-fluorothiophénol, du 4-nitrothiophénol, du 1H,1H,2H,2H-perfluorooctanethiol, ou du 1H,1H,2H,2H-perfluorodecanethiol.

5. Circuit électronique selon l'une quelconque des revendications 1 à 4, dans lequel le matériau métallique est de l'or, de l'argent, de l'aluminium, du palladium, du platine, du nickel, du chrome, du cuivre, du calcium, du titane et ou un alliage métallique comprenant au moins l'un de ces métaux.

6. Circuit électronique selon l'une quelconque des revendications 1 à 5, comprenant au moins un transistor (T_P, T_N) organique à effet à structure métal-oxyde-semiconducteur comprenant ledit empilement.

7. Circuit électronique selon l'une quelconque des revendications 1 à 6, comprenant ledit empilement en deux exemplaires, le premier empilement avec un premier matériau semiconducteur organique et le deuxième empilement avec un deuxième matériau semiconducteur organique, la SAM (18) du premier empilement étant réalisée simultanément avec la SAM (18) du deuxième empilement.

8. Procédé de fabrication d'un circuit électronique (INV) comprenant la formation d'au moins un empilement d'une piste (12) d'un matériau métallique ayant un travail de sortie (WF), d'un bloc d'un matériau semiconducteur organique (14, 16) ayant une bande d'énergie HOMO et une bande d'énergie LUMO, et d'une couche monomoléculaire auto-assemblée (18), appelée SAM, interposée entre la piste et le bloc, la SAM comprenant des premières molécules telles que l'écart entre le travail de sortie modifié de l'ensemble comprenant la piste et la SAM, dans le cas où la SAM comprend seulement les premières molécules, et le niveau bas de la bande d'énergie LUMO et l'écart entre le travail de sortie de l'ensemble comprenant la piste et la SAM, dans le cas d'une SAM comprenant seulement les premières molécules, et le niveau haut de la bande d'énergie HOMO soient chacun supérieurs à 0,2 eV, dans lequel la SAM (18) est formée par le dépôt d'une solution comprenant les premières molécules, dans lequel le travail de sortie modifié de l'ensemble comprenant la piste et la SAM, dans le cas où la SAM comprend seulement les premières molécules, est augmenté par rapport au travail de sortie du matériau métallique, et dans lequel la solution comprend en outre des deuxièmes molécules, telles que le travail de sortie modifié de l'ensemble comprenant la piste et la SAM, dans le cas où la SAM comprend seulement les deuxièmes molécules, est diminué par rapport au travail de sortie du matériau métallique.

9. Procédé selon la revendication 8, dans lequel la solution comprend le mélange d'un solvant polaire et d'un solvant apolaire.

10. Procédé selon la revendication 8 ou 9, comprenant la formation dudit empilement en deux exemplaires, le premier empilement avec un premier matériau semiconducteur organique et le deuxième empilement avec un deuxième matériau semiconducteur organique, la SAM (18) du premier empilement étant réalisée simultanément avec la SAM (18) du deuxième empilement.
